# EUROPEAN PATENT SPECIFICATION

(11) **EP 1 964 209 B1**
(45) Date of publication and mention of the grant of the patent: **18.02.2015**
(21) Application number: 06848122.5
(22) Date of filing: 26.12.2006
(51) Int. Cl.: H01Q 21/28, H04B 7/10

(54) **ANTENNAS WITH POLARIZATION DIVERSITY**
ANTENNEN MIT POLARISATIONS-DIVERSITÄT
ANTENNES DOTEES D UNE DIVERSITE DE POLARISATION

(30) Priority: 23.12.2005 US 753442 P
(43) Date of publication of application: 03.09.2008
(73) Proprietor: Ruckus Wireless, Inc., Sunnyvale, CA 94089 (US)
(72) Inventor: SHTROM, Victor, Sunnyvale, California 94089 (US); KISH, William, Sunnyvale, California 94089 (US); BARRON, Bernard, Sunnyvale, California 94089 (US)
(74) Representative: Käck, Jürgen
(86) International application number: PCT/US2006/049211
(87) International publication number: WO 2007/076105

(56) References cited:
- WO-A2-98/37590
- JP-A- 11 215 040
- US-A- 5 786 793
- US-A- 6 091 364
- US-A1- 2002 084 942
- US-A1- 2002 084 943
- US-A1- 2004 036 654
- US-A1- 2004 227 669
- US-B1- 6 407 719
- US-B2- 7 312 762

## Description

### CROSS-REFERENCE TO RELATED APPLICATIONS

The present application is a continuation-in-part of U.S. patent application number US 2006 0038735 filed January 21, 2005 and entitled "System and Method for a Minimized Antenna Apparatus with Selectable Elements," which claims the priority benefit of unpublished U.S. provisional patent application number 60/602,711 filed August 18, 2004 and entitled "Planar Antenna Apparatus for Isotropic Coverage and QoS Optimization in Wireless Networks" and unpublished U.S. provisional patent application number 60/603,157 filed August 18, 2004 and entitled "Software for Controlling a Planar Antenna Apparatus for Isotropic Coverage and QoS Optimization in Wireless Networks"; the present application also claims the priority benefit of unpublished U.S. provisional patent application number 60/753,442 filed December 23, 2005 and entitled "Coaxial Antennas with Polarization Diversity."

This application is related to unpublished U.S. provisional patent application number 60/865,148 filed November 9, 2006 and entitled "Multiple Input Multiple Output (MIMO) Antenna Configurations,".

### BACKGROUND OF THE INVENTION

### Field of the Invention

The present invention relates generally to wireless communications and more particularly to antenna systems with polarization diversity.

### Description of the Related Art

In communications systems, there is an ever-increasing demand for higher data throughput and a corresponding drive to reduce interference that can disrupt data communications. For example, in an Institute of Electrical and Electronics Engineers, Inc. (IEEE) 802.11 network, an access point such as a base station may communicate with one or more remote receiving nodes such as a network interface card over a wireless link. The wireless link may be susceptible to interference from other access points and stations (nodes), other radio transmitting devices, changes or disturbances in the wireless link environment between the access point and the remote receiving node and so forth. The interference may be such to degrade the wireless link by forcing communication at a lower data rate or may be sufficiently strong as to completely disrupt the wireless link.

One solution for reducing interference in the wireless link between the access point and the remote receiving node is to provide several omnidirectional antennas in a 'diversity' scheme. In such an implementation, a common configuration for the access point includes a data source coupled via a switching network to two or more physically separated omnidirectional antennas. The access point may select one of the omnidirectional antennas by which to maintain the wireless link. Because of the separation between the omnidirectional antennas, each antenna experiences a different signal environment and each antenna contributes a different interference level to the wireless link. The switching network couples the data source to whichever of the omnidirectional antennas experiences the least interference in the wireless link.

One problem with using two or more omnidirectional antennas for the access point is that typical omnidirectional antennas are vertically polarized. Vertically polarized radio frequency (RF) energy does not travel as efficiently as, for example, horizontally polarized RF energy inside an office or dwelling space. To date, prior art solutions for creating horizontally polarized RF antennas have not provided adequate RF performance to be commercially successful.

### SUMMARY OF THE INVENTION

The gain of an antenna is a passive phenomenon as antennas conserve energy. Power is not added by an antenna but redistributed to provide more radiated power in a certain direction than would be transmitted by, for example, an isotropic antenna. Thus, if an antenna has a gain of greater than one in some directions, the antenna must have a gain of less than one in other directions. High-gain antennas have the advantage of longer range and better signal quality but require careful aiming in a particular direction. Low-gain antennas have shorter range but antenna orientation is generally inconsequential.

With these principles in mind, embodiments of the present invention allow for the use of both vertically and horizontally polarized antenna arrays. The horizontally polarized antenna arrays of the present invention allow for the efficient distribution of RF energy into a communications environment through, for example, selectable antenna elements, reflectors and/or directors that create and influence a particular radiation pattern (e.g., a substantially omnidirectional radiation pattern). In conjunction with the vertically polarized array, a particular high-gain wireless environment may be created such that one wireless environment does not interfere with other nearby wireless environments (e.g., between floors of an office building) and, further, avoids interference created by the other environments.

The present invention provides for an antenna system. The antenna system is a multiple-input and multi-output (MIMO) antenna system. The antenna system includes a plurality of horizontally polarized antenna arrays coupled to a vertically polarized antenna array. Each polarized array may be coupled to a different radio. The vertically polarized antenna array may generate a radiation pattern substantially perpendicular to a radiation pattern generated by one of the horizontally polarized antenna arrays. The horizontally polarized antenna arrays may include antenna elements selectively coupled to a radio frequency feed port.

The horizontally polarized antenna arrays are coupled to the vertically polarized antenna array by fitting the vertical array inside one or more rectangular slits in the printed circuit board (PCB) of the horizontal arrays. Connector tabs on the vertical array may be soldered to the horizontal arrays at the one or more rectangular slits in the PCBs of the horizontal arrays.

In some embodiments, the radiation pattern generated by one of the horizontally polarized antenna arrays is substantially omnidirectional and substantially in the plane of the horizontally polarized antenna array when a first and second antenna element are coupled to the radio frequency feed port. In some embodiments, the horizontally polarized antenna array may include a reflector or director to restrain or otherwise influence the radiation pattern generated by the antenna elements coupled to the radio frequency feed port. In other embodiments, one or more of the antenna elements include loading structures that slow down electrons and change the resonance of the antenna elements. The antenna elements, in one embodiment, are oriented substantially to the edges of a square shaped substrate. In another embodiment, the antenna elements are oriented substantially to the edges of a triangular shaped substrate.

Some embodiments of the present invention may implement a series a parasitic elements on an antenna array in the system. At least two of the elements may be selectively coupled to one another by a switching network. Through the selective coupling of the parasitic elements, the elements may collectively operate as a reflector or a director, whereas prior to the coupling the elements may have been effectively invisible to an emitted radiation pattern. By collectively operating as, for example, a reflector, a radiation pattern emitted by the driven elements of an array may be influenced through the reflection back of the pattern in a particular direction thereby increasing the gain of the pattern in that direction.

In some embodiments of the present invention, the radio frequency feed port of the horizontally polarized antenna array is coupled to an antenna element by an antenna element selector. The antenna element selector, in one embodiment, comprises an RF switch. In another embodiment, the antenna element selector comprises a p-type, intrinsic, n-type (PIN) diode.

In another embodiment of the presently disclosed antenna system, the horizontal and vertically polarized antenna arrays may be coupled by a PCB connector element. A portion of the PCB connector element may fit inside the one or more rectangular slits formed within the PCB of the horizontally polarized antenna array. A connector tab on the PCB connector element may be soldered to the horizontally polarized array at a rectangular slit. The PCB connector may also be soldered to the vertically polarized antenna array. For example, soldering may occur at a feed intersection on the PCB of the horizontal and/or vertical arrays and/or the PCB connector. A zero Ohm resistor placed to jumper the RF trace may also be used to effectuate the coupling.

A still further embodiment of the present invention discloses an antenna system that includes horizontally polarized antenna arrays with plural antenna elements configured to be selectively coupled to a radio frequency feed port. A substantially omnidirectional radiation pattern substantially in the plane of the horizontally polarized antenna arrays is generated when a first antenna element and a second antenna element of the plurality of antenna elements are coupled to the radio frequency feed port. The system further includes vertically polarized antenna arrays coupled to the horizontally polarized antenna arrays. The vertically polarized antenna arrays generate a radiation pattern substantially perpendicular to a radiation pattern generated by the plurality of horizontally polarized antenna arrays.

In one alternative embodiment, each of the horizontally polarized antenna arrays are coupled to one of the vertically polarized antenna arrays by fitting each one of the vertically polarized antenna arrays inside a rectangular slit formed within the printed circuit board of one of the horizontally polarized antenna arrays. In another alternative embodiment, each of the horizontally polarized antenna arrays are coupled to one of the vertically polarized antenna arrays by fitting a portion of a printed circuit board connector element inside a rectangular slit formed within the printed circuit board of one of the horizontally polarized antenna arrays. Each of the vertically polarized antenna arrays are soldered to a printed circuit board connector element at a connector tab.

### BRIEF DESCRIPTION OF THE DRAWINGS

FIGURE 1 illustrates an exemplary dual polarized, high-gain, omnidirectional antenna system in accordance with an embodiment of the present invention.
FIGURE 2A illustrates the individual components of antenna system as referenced in FIGURE 1 and implemented in an exemplary embodiment of the present invention including a vertically polarized omnidirectional array, two horizontally polarized omnidirectional arrays, and a feed PCB.
FIGURE 2B illustrates an alternative embodiment of the antenna system disclosed in FIGURE 1, which does not include a feed PCB.
FIGURE 3 illustrates an exemplary vertically polarized omnidirectional array as may be implemented in an embodiment of the present invention.
FIGURES 4A illustrates a square configuration of a horizontally polarized antenna array with selectable elements as may be implemented in an exemplary embodiment of the present invention.
FIGURE 4B illustrates a square configuration of a horizontally polarized antenna array with selectable elements and reflector/directors as may be implemented in an alternative embodiment of the present invention.
FIGURE 4C illustrates an exemplary antenna array including both selectively coupled antenna elements and selectively coupled reflector/directors as may be implemented in an alternative embodiment of the present invention.
FIGURE 4D illustrates a triangular configuration of a horizontally polarized antenna array with selectable elements as may be implemented in an alternative embodiment of the present invention.
FIGURE 4E illustrates an exemplary set of dimensions for one antenna element of the horizontally polarized antenna array shown in FIGURE 4A and in accordance with an exemplary embodiment of the present invention.
FIGURE 5 illustrates a series of low-gain antenna arrays in accordance with alternative embodiments of the present invention.
FIGURE 6 illustrates a series of radiation patterns that may result from implementation of various embodiments of the present invention.
FIGURE 7 illustrates plots of a series of measured radiation patterns with respect to a horizontal and vertical antenna array.
FIGURE 8 illustrates exemplary antenna structure mechanicals for coupling the various antenna arrays and PCB feeds disclosed in various embodiments of the present invention.
FIGURE 9 illustrates alternative antenna structure mechanicals for coupling more than one vertical antenna array to a horizontal array wherein the coupling includes a plurality of slots in the PCB of the horizontal array.

### DETAILED DESCRIPTION

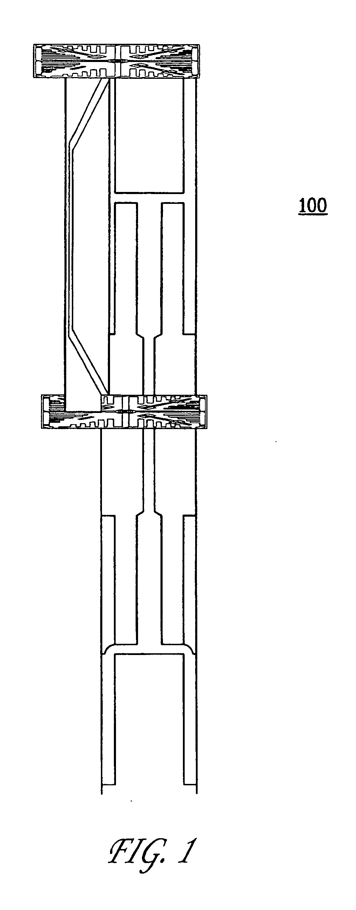

FIGURE 1 illustrates an exemplary dual polarized, high-gain, omnidirectional antenna system 100 in accordance with an embodiment of the present invention. Any reference to the presently disclosed antenna systems being coaxial in nature should not be interpreted (exclusively) as an antenna element consisting of a hollow conducting tube through which a coaxial cable is passed. In certain embodiments of the antenna systems disclosed herein (such as antenna system **100),** two horizontal antenna arrays sharing a common axis including a vertical antenna array are disclosed. Such systems are coaxial to the extent that those horizontal arrays share the aforementioned common vertical axis formed by the vertical array although other configurations are envisioned. Notwithstanding, various cabling mechanisms may be used with respect to a communications device implementing the presently disclosed dual polarized, high-gain, omnidirectional antenna system **100** including a coaxial feed.

While perpendicular horizontal and vertical antenna arrays are disclosed, it is not necessary that the various arrays be perpendicular to one another along the aforementioned axis (*e.g.,* at a 90 degree intersection). Various array configurations are envisioned in the practice of the presently disclosed invention. For example, a vertical array may be coupled to another antenna array positioned at a 45 degree angle with respect to the vertical array. Utilizing various intersection angles with respect to the two or more arrays may further allow for the shaping of a particular RF emission pattern.

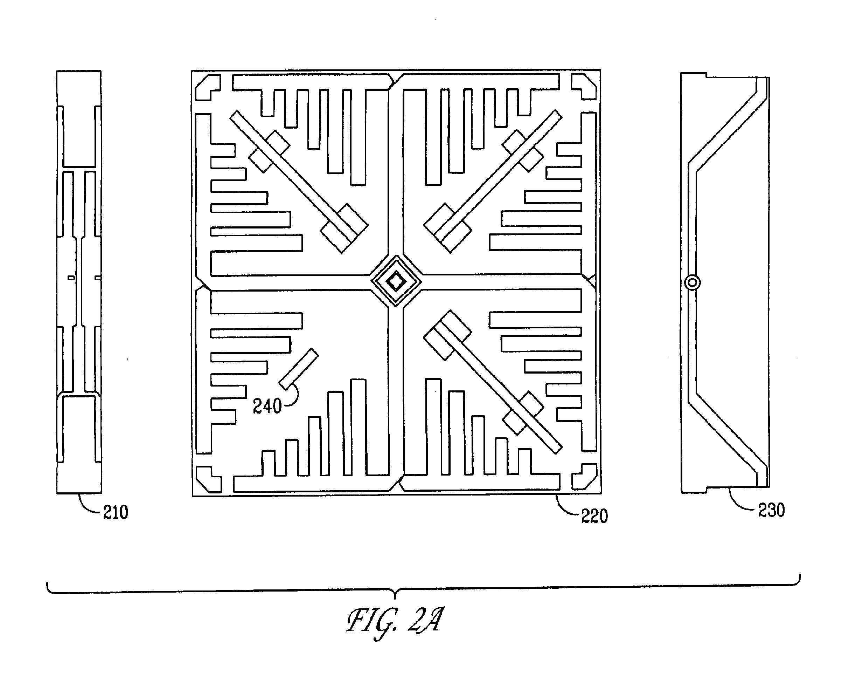

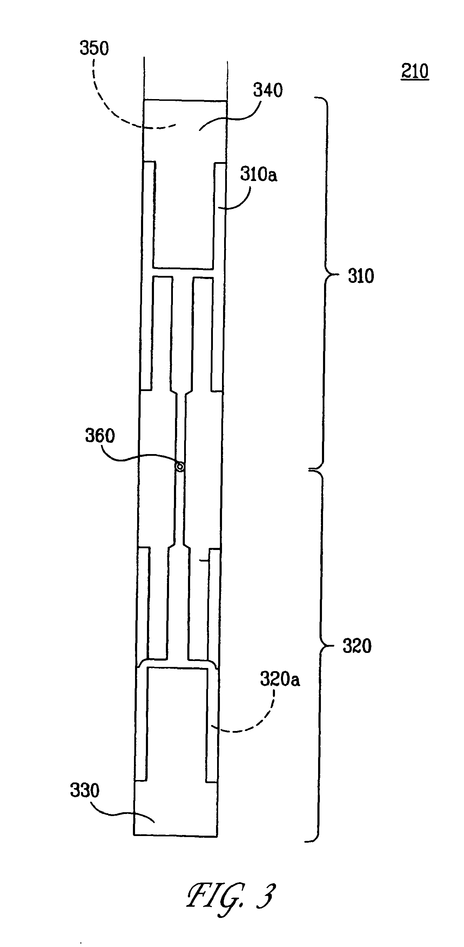

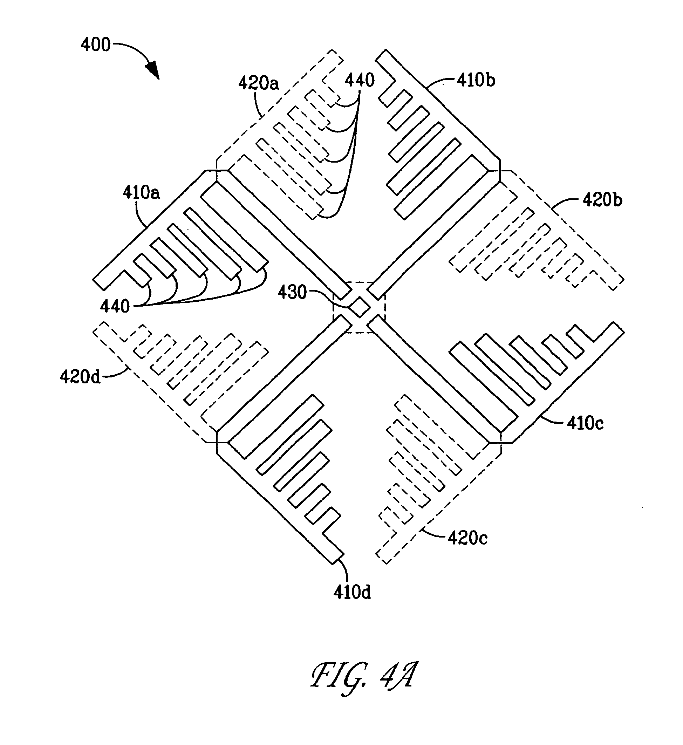

FIGURE 2A illustrates the individual components of antenna system **100** as referenced in FIGURE 1 and implemented in an exemplary embodiment of the present invention. Antenna system **100** as illustrated in FIGURE 1 includes a vertically polarized omnidirectional array **210,** detailed in FIGURE 3 below. Antenna system **100** as illustrated in FIGURE 1 also includes at least one horizontally polarized omnidirectional antenna array **220,** discussed in detail with respect to FIGURES 4A-4D. Antenna system **100** as shown in FIGURE 1 further includes a feed PCB **230** for coupling, for example, two horizontally polarized omnidirectional antenna arrays like array **220.** A different radio may be coupled to each of the different polarizations.

The radiation patterns generated by the varying arrays (*e.g*., vertical with respect to horizontal) may be substantially similar with respect to a particular RF emission pattern. Alternatively, the radiation patterns generated by the horizontal and the vertical array may be substantially dissimilar versus one another.

In some embodiments, the vertically polarized array **210** may include two or more vertically polarized elements as is illustrated in detail with respect to FIGURE 3. The two vertically polarized elements may be coupled to form vertically polarized array **210.** In some embodiments, the vertically polarized array is omnidirectional.

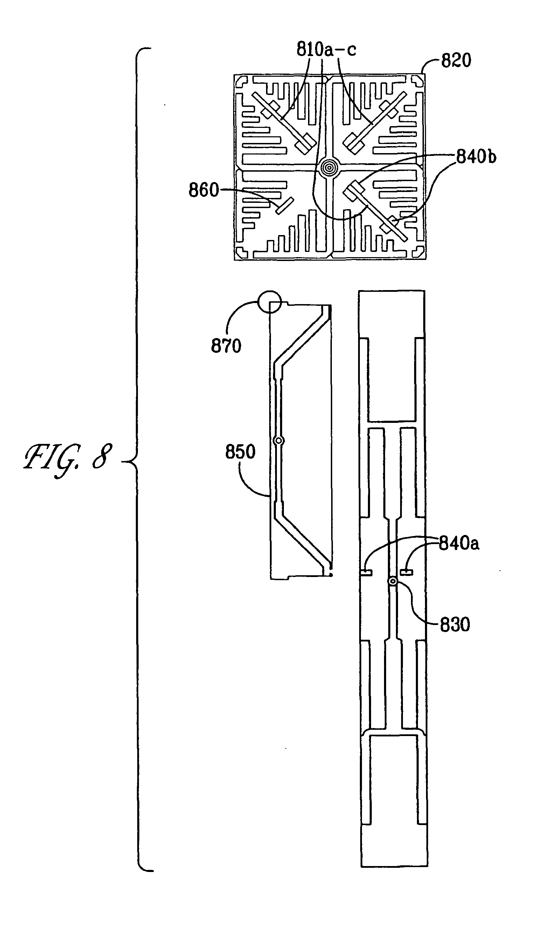

Feed PCB **230** (in some embodiments) couples the horizontally polarized antenna arrays **220** like those illustrated in FIGURE 1. In such an embodiment, the feed PCB **230** may couple horizontally polarized omnidirectional arrays at a feed slot **240** located on horizontal array **220.** In alternative embodiments, the feed PCB **230** may couple each horizontally polarized omnidirectional antenna array **220** at any place on, or slot within, the antenna or supporting PCB. The feed PCB **230** may be soldered to horizontal antenna array **220** at intersecting trace elements in the PCB. For example, an RF trace in the horizontal array may intersect with a similar trace in the vertical array through intersecting of the arrays as discussed, for example, in the context of FIGURE 8.

In some embodiments that omit the aforementioned feed PCB **230,** an intermediate component may be introduced at the trace element interconnect such as a zero Ohm resistor jumper. The zero Ohm resistor jumper effectively operates as a wire link that may be easier to manage with respect to size, particular antenna array positioning and configuration and, further, with respect to costs that may be incurred during the manufacturing process versus, for example, the use of aforementioned feed PCB **230.** Direct soldering of the traces may also occur. While the feed PCB **230** illustrated in FIGURES 1 and 2A couples two horizontal antenna arrays **220,** the horizontal arrays **220** may be further coupled or individually coupled to the vertically polarized antenna array **210** or elements thereof utilizing the techniques discussed above and in the context of FIGURE 8. The coupling of the two (or more) arrays via the aforementioned traces may allow for an RF feed to traverse two disparate arrays. For example, the RF feed may 'jump' the horizontally polarized array to the vertically polarized array. Such 'jumping' may occur in the context of various intermediate elements including a zero Ohm resistor and/or a connector tab as discussed herein.

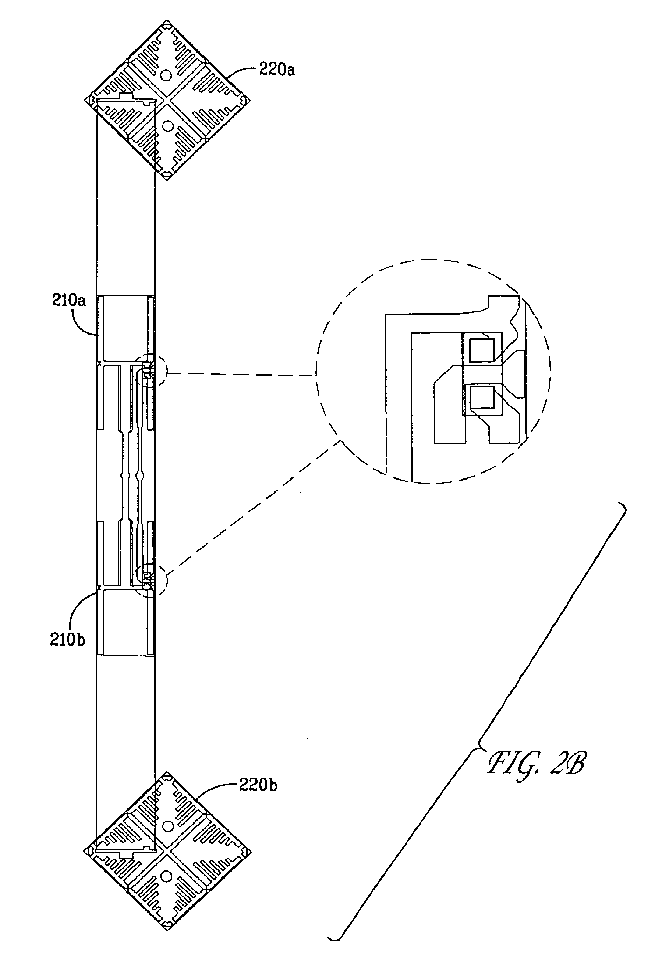

FIGURE 2B illustrates an alternative embodiment of the antenna system disclosed in FIGURE 1, which does not include a feed PCB. The embodiment of FIGURE 2B includes the aforementioned horizontal arrays **220a** and **220b** and the vertical arrays **210a** and **210b.** Instead of utilizing feed PCB **230,** the various arrays may be coupled to one another through a combination of insertion of arrays through various PCB slits as discussed in the context of FIGURE 8 and soldering / jumping feed traces as discussed herein. The inset of FIGURE 2B illustrates where such array-to-array coupling may occur.

FIGURE 3 illustrates an exemplary vertically polarized omnidirectional array **210** like that shown in FIGURES **1** and **2** and including two antenna elements **310** and **320** as may be implemented in an embodiment of the present invention. The vertically polarized omnidirectional antenna elements **310** and **320** of antenna array **210** may be formed on substrate **330** having a first side **340** and a second side **350.** The portions of the vertically polarized omnidirectional array **210** depicted in a dark line **310a** in FIGURE 3 may be on one side **(340)** of the substrate. Conversely, the portions of the vertically polarized omnidirectional array **210** depicted as dashed lines **320a** in FIGURE 3 may be on the other side **(350)** of the substrate **330.** In some embodiments, the substrate 330 comprises a PCB such as FR4, Rogers 4003, or other dielectric material.

The vertically polarized omnidirectional antenna elements **310** and **320** of antenna array **210** in FIGURE 3 are coupled to a feed port **360.** The feed port is depicted as a small circle at the base of the vertically polarized omnidirectional array element **310** in FIGURE 3. The feed port **360** may be configured to receive and/or transmit an RF signal to a communications device and a coupling network (not shown) for selecting one or more of the antenna elements. The RF signal may be received from, for example, an RF coaxial cable coupled to the aforementioned coupling network. The coupling network may comprise DC blocking capacitors and active RF switches to couple the radio frequency feed port 360 to one or more of the antenna elements. The RF switches may include a PIN diode or gallium arsenide field-effect transistor (GaAs FET) or other switching devices as are known in the art. The PIN diodes may comprise single-pole single-throw switches to switch each antenna element either on or off *(i.e.,* couple or decouple each of the antenna elements to the feed port **360).**

FIGURE 4A illustrates a square configuration of a horizontally polarized antenna array **400** with selectable elements as may be implemented in an exemplary embodiment of the present invention. In FIGURE 4A, horizontally polarized antenna array **400** includes a substrate (the plane of FIGURE 4A) having a first side (solid lines **410)** and a second side (dashed lines **420)** that may be substantially parallel to the first side. The substrate may comprise, for example, a PCB such as FR4, Rogers 4003 or some other dielectric material.

On the first side of the substrate (solid lines **410)** in FIGURE 4A, the antenna array **400** includes a radio frequency feed port 430 and four antenna elements **410a-410d.** Although four modified dipoles *(i.e.,* antenna elements) are depicted in FIGURE 4A, more or fewer antenna elements may be implemented with respect to array **400.** Further, while antenna elements **410a-410d** of FIGURE 4A are oriented substantially to the edges of a square shaped substrate thereby minimizing the size of the antenna array **400,** other shapes may be implemented. In some embodiments, the elements may be positioned substantially to the middle or center of the substrate.

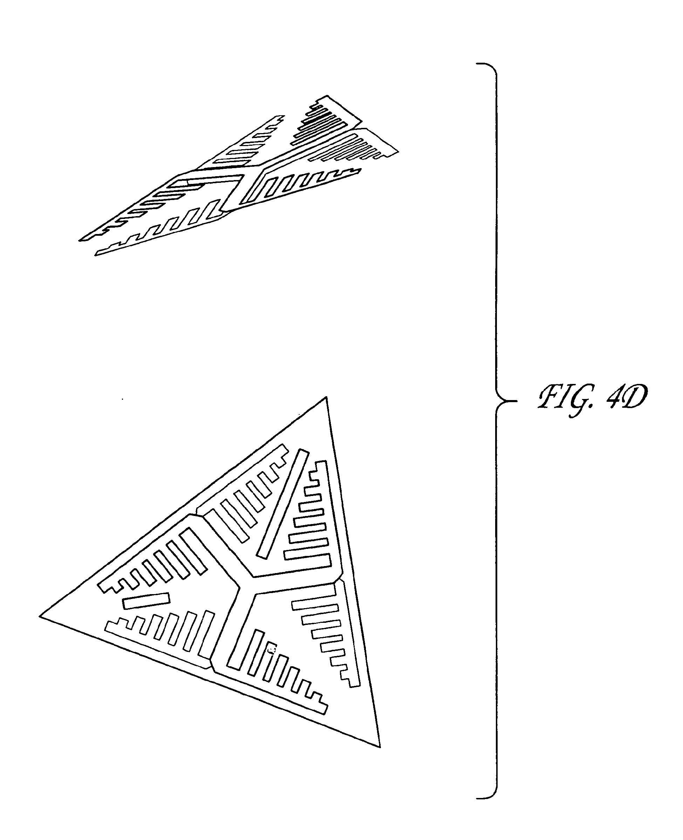

For example, FIGURE 4D illustrates a triangular configuration of a horizontally polarized antenna array with selectable elements as may be implemented in an alternative embodiment of the present invention. Each side of the triangular horizontally polarized antenna array may be equal or proportional to a side of the square horizontally polarized antenna array **400** as shown in FIGURE 4A. Other embodiments may implement unequal or otherwise non-proportional sides with respect to the exemplary square configurations illustrated in, for example, FIGURES 4A. The antenna elements on the triangular array, like its square-shaped counterpart, may be positioned substantially to the edge or the middle/center of the array.

Returning to FIGURE 4A, although the antenna elements **410a-410d** form a radially symmetrical layout about the radio frequency feed port **430,** a number of non-symmetrical layouts, rectangular layouts, and/or layouts symmetrical in only one axis, may be implemented. Furthermore, the antenna elements **410a-410d** need not be of identical dimension notwithstanding FIGURE 4A's depiction of the same.

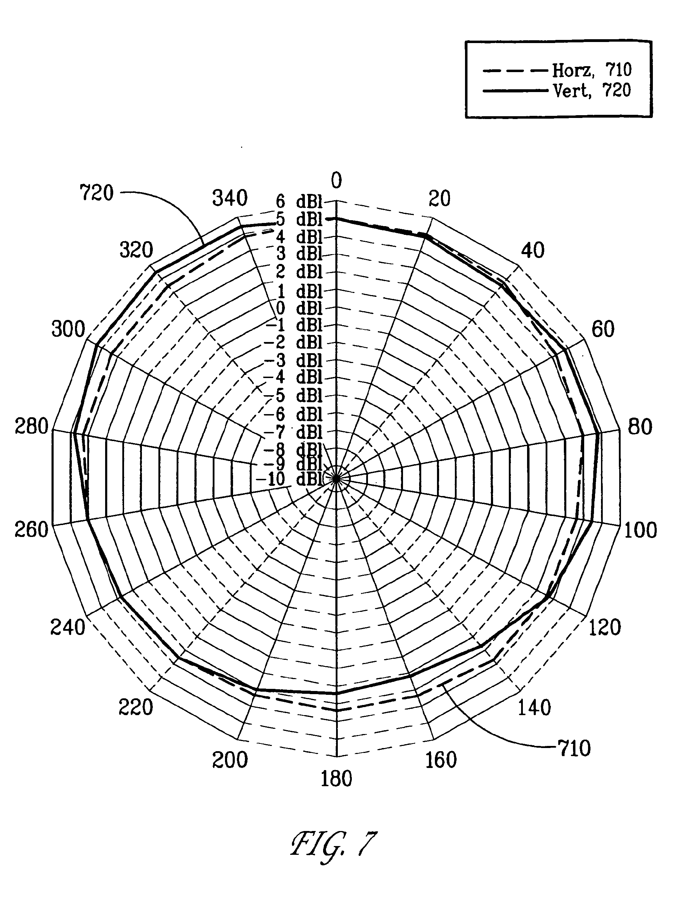

On the second side of the substrate, depicted as dashed lines in FIGURE 4A, the antenna array **400** includes a ground component **420.** A portion of the ground component **420** (*e.g.,* the portion **420a)** may be configured to form a modified dipole in conjunction with the antenna element **410a.** As shown in FIGURE 4A, the dipole is completed for each of the antenna elements **410a-410d** by respective conductive traces **420a-420d** extending in mutually opposite directions. The resultant modified dipole provides a horizontally polarized directional radiation pattern (*i.e*., substantially in the plane of the antenna array **400),** as illustrated in, for example, FIGURE 7.

To minimize or reduce the size of the antenna array 400, each of the modified dipoles (*e.g*., the antenna element **410a** and the portion **420a** of the ground component **420)** may incorporate one or more loading structures **440.** For clarity of illustration, only the loading structures **440** for the modified dipole formed from the antenna element **410a** and the portion **420a** are numbered in FIGURE 4A. By configuring loading structure **440** to slow down electrons and change the resonance of each modified dipole, the modified dipole becomes electrically shorter. In other words, at a given operating frequency, providing the loading structures **440** reduces the dimension of the modified dipole. Providing the loading structures **440** for one or more of the modified dipoles of the antenna array **400** minimizes the size of the antenna array **440.**

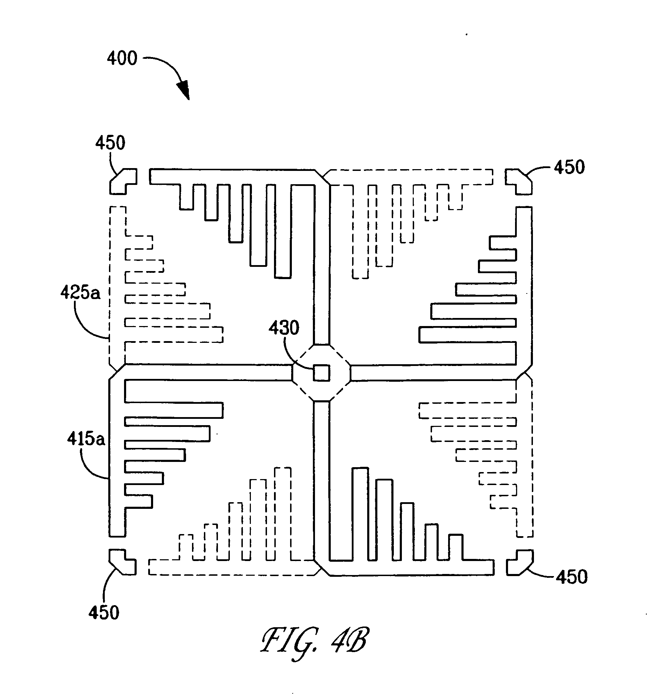

FIGURE 4B illustrates a square configuration of a horizontally polarized antenna array **400** with selectable elements and reflector/directors as may be implemented in an alternative embodiment of the present invention. The antenna array **400** of FIGURE 4B includes one or more reflector/directors **450.** The reflector/directors **450** comprise passive elements (versus an active element radiating RF energy) that constrain the directional radiation pattern of the modified dipoles formed by antenna elements **415a** in conjunction with portions **425a** of the ground component. For the sake of clarity, only element **415a** and portion **425a** are labeled in FIGURE 4B. Because of the reflector/directors **450,** the antenna elements **415** and the portions **425** are slightly different in configuration from the antenna elements **410** and portions **420** of FIGURE 4A. Reflector/directors **250** may be placed on either side of the substrate. Additional reflector/directors (not shown) may be included to further influence the directional radiation pattern of one or more of the modified dipoles.

In some embodiments, the antenna elements may be selectively or permanently coupled to a radio frequency feed port. The reflector/directors (*e.g*., parasitic elements), however, may be configured such that the length of the reflector/directors may change through selective coupling of one or more reflector/directors to one another. For example, a series of interrupted and individual parasitic elements that are 100 mils in length may be selectively coupled in a manner similar to the selective coupling of the aforementioned antenna elements.

By coupling together a plurality of the aforementioned elements, the elements may effectively become reflectors that reflect and otherwise shape and influence the RF pattern emitted by the active antenna elements (*e.g*., back toward a drive dipole resulting in a higher gain in that direction). RF energy emitted by an antenna array may be focused through these reflectors/directors to address particular nuances of a given wireless environment. Similarly, the parasitic elements (through decoupling) may be made effectively transparent to any emitted radiation pattern. Similar reflector systems may be implemented on other arrays (*e.g*., the vertically polarized array).

A similar implementation may be used with respect to a director element or series of elements that may collectively operate as a director. A director focuses energy from source away from the source thereby increasing the gain of the antenna. In some embodiments of the present invention, both reflectors and directors can be used to affect and influence the gain of the antenna structure. Implementation of the reflector/directors may occur on both arrays, a single array, or on certain arrays (*e.g.,* in the case of two horizontal arrays and a single vertical array, the reflector/director system may be present only on one of the horizontal arrays or, alternatively, on neither horizontal array and only the vertical array).

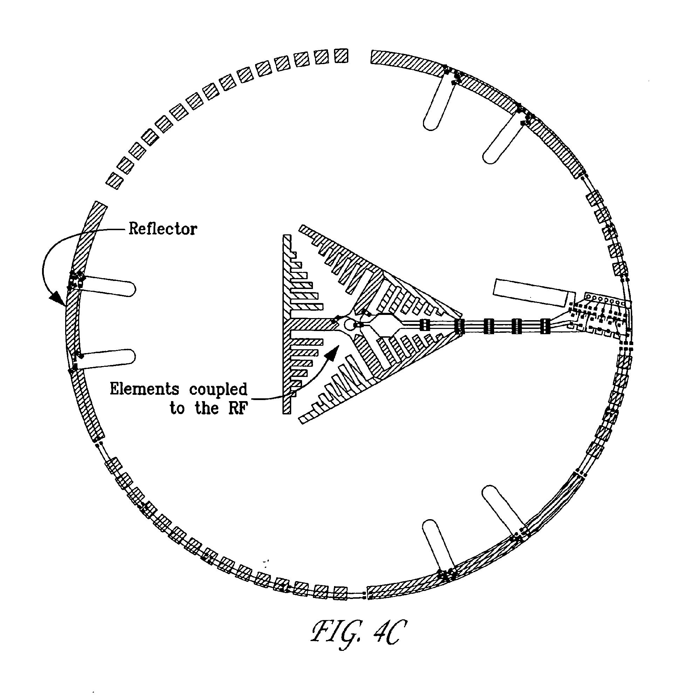

FIGURE 4C illustrates an exemplary antenna array including a series of antenna elements that are selectively coupled to a radio feed port. Additionally, the antenna array includes a series of selectively coupled parasitic elements that may collectively operate as, for example, a reflector. Depending on the particular length of the selectively coupled elements, the selectively coupled elements may also function as a director. Selective coupling of both the antenna and parasitic elements may utilize a coupling network and various intermediate elements (e.g., PIN diodes) as discussed above. Through selective coupling control of both antenna and parasitic elements, further control of an RF emission pattern and a resulting wireless environment may result.

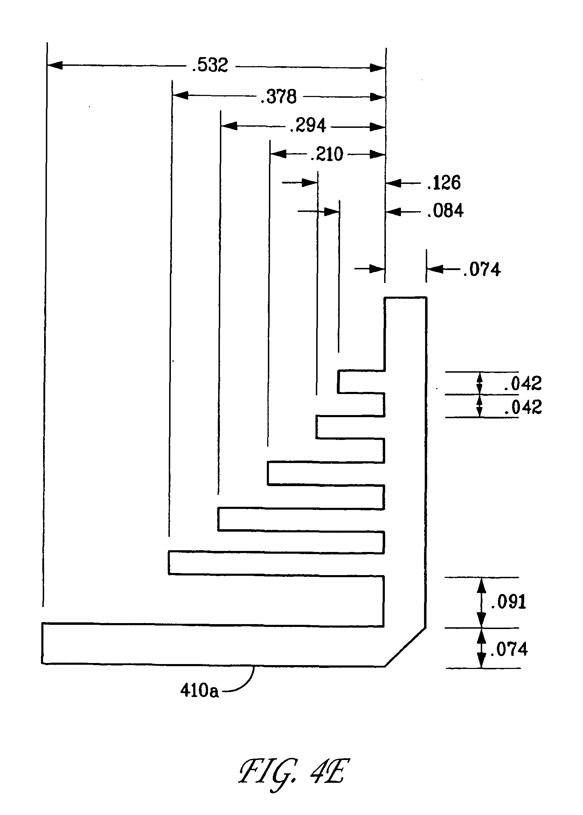

FIGURE 4E illustrates an exemplary set of dimensions for one antenna element of the horizontally polarized antenna array **400** shown in FIGURE 4A and in accordance with an exemplary embodiment of the present invention. The dimensions of individual components of the antenna array **400** (*e.g.,* the antenna element **410a** and the portion **420a)** may depend upon a desired operating frequency of the antenna array **400.** RF simulation software (*e.g*., IE3D from Zeland Software, Inc.) may aid in establishing the dimensions of the individual components. The antenna component dimensions of the antenna array **400** illustrated in FIGURE 4E are designed for operation near 2.4 GHz based on a Rogers 4003 PCB substrate. A different substrate having different dielectric properties, such as FR4, may require different dimensions than those shown in FIGURE 4E.

Returning to FIGURES 4A and 4B, radio frequency feed port **430** (in conjunction with any variety of antenna elements) receives an RF signal from and/or transmits an RF signal to a communication device (not shown) in a fashion similar to that of the feed port **360** illustrated in FIGURE 3. The communication device may include virtually any device for generating and/or receiving an RF signal. The communication device may include, for example, a radio modulator/demodulator. The communications device may also include a transmitter and/or receiver such as an 802.11 access point, an 802.11 receiver, a set-top box, a laptop computer, an IP-enabled television, a PCMCIA card, a remote control, a Voice Over Internet telephone or a remote terminal such as a handheld gaming device. In some embodiments, the communication device may include circuitry for receiving data packets of video from a router and circuitry for converting the data packets into 802.11 compliant RF signals as are known in the art. The communications device may comprise an access point for communicating to one or more remote receiving nodes (not shown) over a wireless link, for example in an 802.11 wireless network. The device may also form a part of a wireless local area network by enabling communications among several remote receiving nodes.

As referenced above, an antenna element selector (not shown) may be used to couple the radio frequency feed port **430** to one or more of the antenna elements **410.** The antenna element selector may comprise an RF switch (not shown), such as a PIN diode, a GaAs FET, or other RF switching devices as known in the art. In the antenna array **400** illustrated in FIGURE 4A, the antenna element selector comprises four PIN diodes, each PIN diode connecting one of the antenna elements **410a-410d** to the radio frequency feed port **430.** In this embodiment, the PIN diode comprises a single-pole single-throw switch to switch each antenna element either on or off (*i.e*., couple or decouple each of the antenna elements **410a-410d** to the radio frequency feed port 430).

A series of control signals may be used to bias each PIN diode. With the PIN diode forward biased and conducting a DC current, the PIN diode switch is on, and the corresponding antenna element is selected. With the diode reverse biased, the PIN diode switch is off. In this embodiment, the radio frequency feed port **430** and the PIN diodes of the antenna element selector are on the side of the substrate with the antenna elements **410a-410d,** however, other embodiments separate the radio frequency feed port **430,** the antenna element selector, and the antenna elements **410a-410d.**

In some embodiments, one or more light emitting diodes (LED) (not shown) are coupled to the antenna element selector. The LEDs function as a visual indicator of which of the antenna elements **410a-410d** is on or off. In one embodiment, an LED is placed in circuit with the PIN diode so that the LED is lit when the corresponding antenna element **410** is selected.

In some embodiments, the antenna components (e.g., the antenna elements **410a-410d,** the ground component 420, and the reflector/directors **450)** are formed from RF conductive material. For example, the antenna elements **410a-410d** and the ground component **420** may be formed from metal or other RF conducting material. Rather than being provided on opposing sides of the substrate as shown in FIGURES 4A and 4B, each antenna element **410a-410d** is coplanar with the ground component **420.** In some embodiments, the antenna components may be conformally mounted to a housing. In such embodiments, the antenna element selector comprises a separate structure (not shown) from the antenna elements **410a-410d.** The antenna element selector may be mounted on a relatively small PCB, and the PCB may be electrically coupled to the antenna elements **410-410d.** In some embodiments, the switch PCB is soldered directly to the antenna elements **410a-410d.**

In an exemplary embodiment for wireless LAN in accordance with the IEEE 802.11 standard, the antenna arrays are designed to operate over a frequency range of about 2.4 GHz to 2.4835 GHz. With all four antenna elements **410a-410d** selected to result in an omnidirectional radiation pattern, the combined frequency response of the antenna array **400** is about 90 MHz. In some embodiments, coupling more than one of the antenna elements **410a-410d** to the radio frequency feed port **430** maintains a match with less than 10 dB return loss over 802.11 wireless LAN frequencies, regardless of the number of antenna elements **410a-410d** that are switched on.

Selectable antenna elements **410a-410d** may be combined to result in a combined radiation pattern that is less directional than the radiation pattern of a single antenna element. For example, selecting all of the antenna elements **410a-410d** results in a substantially omnidirectional radiation pattern that has less directionality than the directional radiation pattern of a single antenna element. Similarly, selecting two or more antenna elements (*e.g*., the antenna element **410a** and the antenna element **410c** oriented opposite from each other) may result in a substantially omnidirectional radiation pattern. In this fashion, selecting a subset of the antenna elements **410a-410d,** or substantially all of the antenna elements **410a-410d,** may result in a substantially omnidirectional radiation pattern for the antenna array 400. Reflector/directors 450 may further constrain the directional radiation pattern of one or more of the antenna elements **410a-410d** in azimuth. Other benefits with respect to selectable configurations are disclosed in U.S. patent application number US 20060038735 filed January 21, 2005 and entitled "System and Method for a Minimized Antenna Apparatus with Selectable Elements."

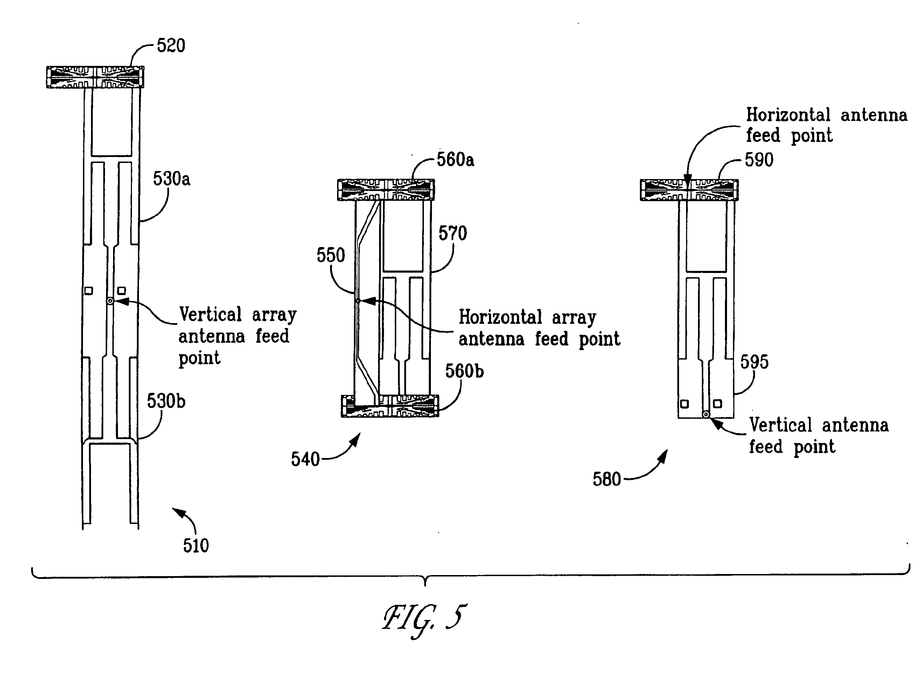

FIGURE 5 illustrates a series of low-gain antenna arrays in accordance with alternative embodiments of the present invention. In antenna array 510, a horizontally polarized omnidirectional array **520** is coupled to two vertically polarized omnidirectional arrays 530a and **530b.** The vertically polarized omnidirectional arrays **(530a** and **530b)** may produce a higher gain radiation pattern while the horizontally polarized omnidirectional arrays **520** may produce a lower gain radiation pattern.

In antenna array **540,** a feed PCB 550 is coupled to the two horizontally polarized omnidirectional arrays **560a** and **560b,** which are (in turn) coupled to the one vertically polarized omnidirectional array **570.** The feed PCB **550** and two horizontally polarized omnidirectional arrays **560a** and **560b** may produce a higher gain radiation pattern while the vertically polarized omnidirectional array **570** produces a lower gain radiation pattern.

In yet another embodiment **(580),** a single horizontally polarized omnidirectional array **590** may be coupled to one vertically polarized omnidirectional array **595.** The horizontally polarized omnidirectional array **590** and the vertically polarized omnidirectional array 595 may each produce a lower gain radiation pattern.

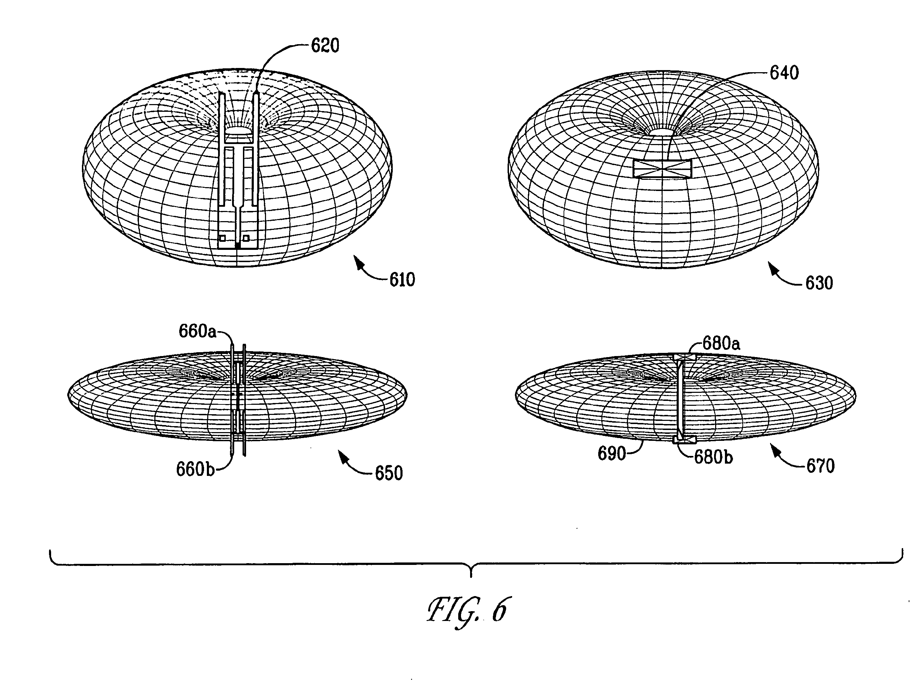

FIGURE 6 illustrates a series of possible radiation patterns that may result from implementation of various embodiments of the present invention. In pattern **610,** a single vertical antenna array **620** emits a low-gain radiation pattern. In pattern **630,** a single horizontal array **640** emits a similar low-gain radiation pattern. A dual vertical array of antenna elements **660a** and **660b** emits a higher gain radiation pattern **650** as does a pair of horizontal antenna elements **680a** and **680b** coupled by a PCB feed line **690** with respect to pattern **670.**

FIGURE 7 illustrates plots of a series of measured radiation patterns **700.** For example, plot **710** illustrates exemplary measured radiation patterns with respect to an exemplary horizontal array. By further example, plot **720** illustrates exemplary measured radiation patterns with respect to an exemplary vertical antenna array.

FIGURE 8 illustrates exemplary antenna structure mechanicals for coupling the various antenna arrays and PCB feeds disclosed in various embodiments of the present invention. Small rectangular slits **810a-810c** may be formed within the PCB of a horizontally polarized omnidirectional array **820.** Similarly, small rectangular slits may be formed within the PCB of a vertically polarized omnidirectional array **830.** The vertically polarized omnidirectional array **830** may fit inside one of the slits **810c** of the horizontally polarized omnidirectional array **820.** Connector tabs **840a** of the vertically polarized omnidirectional array **830** may be soldered to connector tabs **840b** of the horizontally polarized omnidirectional array **820.** In some embodiments, the connector tabs comprise copper. One or more vertically polarized omnidirectional arrays **830** may fit within the horizontally polarized omnidirectional array **820** via the slits **810a-810c.** The coupling of the two (or more) arrays via the connector tab (or any other coupling mechanism such as direct soldering) may allow for an RF feed to traverse two disparate arrays. For example, the RF feed may 'jump' the horizontally polarized array to the vertically polarized array.

One or more feed PCBs **850** may also fit into a small slit 860 within the horizontally polarized omnidirectional array **820.** Specifically, a specifically configured portion **870** of the feed PCB **850** fits within small slit 860. One or more feed PCBs **850** may be coupled to the horizontally polarized omnidirectional array 820 in this fashion. In other embodiments, one or more feed PCBs **850** may be coupled to the vertically polarized omnidirectional array **830.** The aforementioned connector tab / soldering methodology may also be used in this regard. Similarly, one or more horizontally polarized omnidirectional arrays 820 may be coupled to one or more vertically polarized omnidirectional arrays **830** in any number of ways. Similarly, those skilled in the art will appreciate that the feed PCB **850** may be coupled to one or more horizontally polarized omnidirectional arrays 820 and/or one or more vertically polarized omnidirectional arrays **830.**

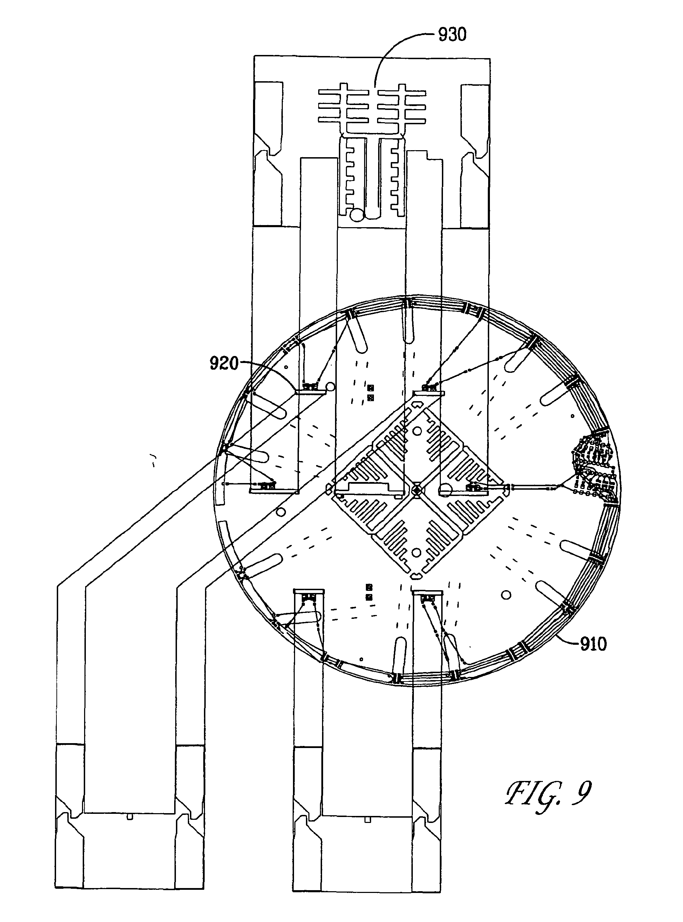

FIGURE 9 illustrates alternative antenna structure mechanicals for coupling more than one vertical antenna array to a horizontal array wherein the coupling includes a plurality of slots in the PCB of the horizontal array. As seen in FIGURE 9, the horizontal array **910** includes multiple slots **920** for receiving a vertical array **930.** The actual coupling of the horizontal **910** and vertical array **930** may occur in a fashion similar to those disclosed above (e.g., direct soldering at a trace and/or use of a jumper resistor).

The embodiments disclosed herein are illustrative. Various modifications or adaptations of the structures and methods described herein may become apparent to those skilled in the art. For example, embodiments of the present invention may be used with respect to MIMO wireless technologies that use multiple antennas as the transmitter and/or receiver to produce significant capacity gains over single-input and single-output (SISO) systems using the same bandwidth and transmit power. Examples of such MIMO antenna systems are disclosed in U.S. provisional patent application number 60/865,148.

## Claims

1. A multiple-input, multiple-output (MIMO) antenna system, comprising:
at least one horizontally polarized antenna (220, 400, 820) disposed on a first printed circuit board; and
at least one vertically polarized antenna (210, 830) disposed on a second circuit board and coupled to the at least one horizontally polarized antenna (220,400, 820), wherein the at least one horizontally polarized antenna (220, 400, 820) is coupled to the at least one vertically polarized antenna (210, 830) by fitting the vertically polarized antenna (210, 830) inside at least one rectangular slit (810a-c) formed within the printed circuit board of the at least one horizontally polarized antenna (220, 400, 820).

2. The MIMO antenna system of claim 1, wherein the polarization of the vertically polarized antenna (210, 830) is substantially perpendicular to the polarization of the at least one horizontally polarized antenna (220, 400, 820).

3. The MIMO antenna system of claim 1, wherein the radiation pattern of the vertically polarized antenna (210, 830) is substantially similar to the radiation pattern of the at least one horizontally polarized antenna (220, 400, 820).

4. The MIMO antenna system of claim 1, wherein the radiation pattern of the vertically polarized antenna (210, 830) is substantially dissimilar to the radiation pattern of the at least one horizontally polarized antenna (220, 400, 820).

5. The MIMO antenna system of claim 1, wherein the at least one horizontally polarized antenna (220, 400, 820) includes a plurality of antenna elements (410a-d) configured to be selectively coupled to a radio frequency feed port (430).

6. The MIMO antenna system of claim 5, wherein a substantially omnidirectional radiation pattern substantially in the plane of the at least one horizontally polarized antenna (220, 400, 820) is generated when a first antenna element (410a) and a second antenna element (410c) of the plurality of antenna elements (410a-d) are coupled to the radio frequency feed port (430).

7. The MIMO antenna system of claim 5, wherein at least one of the plurality of antenna elements (410a-d) includes a loading structure (440) configured to slow down electrons and change the resonance of the at least one of the plurality of antenna elements (410a-d).

8. The MIMO antenna system of claim 5, wherein the plurality of antenna elements (410a-d) on the at least one horizontally polarized antenna (220, 400, 820) are oriented substantially to the edges or substantially to the middle of a square shaped substrate or a triangular shaped substrate.

9. The MIMO antenna system of claim 5, wherein the radio frequency feed port (430) is selectively coupled to at least one of the plurality of antenna elements (410a-d) by an antenna element selector.

10. The MIMO antenna system of claim 9, wherein the antenna element selector comprises an KF switch or a PIN diode.

11. The MIMO antenna system of claim 6, further comprising at least one reflector or director (450) configured to influence the radiation pattern of the first antenna element (410a) and the second antenna element (410c) coupled to the radio frequency feed port (430).

12. The MIMO antenna system of claim 1, wherein a connector tab (840a) on the vertically polarized antenna (210, 830) is soldered to the at least one horizontally polarized antenna (220, 400, 820) at the at least one rectangular slit (860) formed within the printed circuit board of the at least one horizontally polarized antenna (220, 400, 820).

13. The MIMO antenna system of claim 1, wherein each antenna (210, 220, 400, 820, 830) is coupled to a different radio.

14. The MIMO antenna system of claim 1, wherein each of the at least one horizontally polarized antenna (220, 400, 820) and the vertically polarized antenna (210, 830) includes a plurality of parasitic antenna elements (450), at least two of the plurality of parasitic antenna elements (450) on each of the horizontally and vertically polarized antenna (210, 220, 400, 820, 830) configured to be selectively coupled to one another by a switching network, the selective coupling of the at least two of the plurality of parasitic antenna elements (450) causing each of the at least two of the plurality of parasitic antenna elements (450) to collectively reflect a radiation pattern energy back toward a source of the radiation pattern, the reflection of the radiation pattern increasing gain of the reflected radiation pattern in the direction of pattern reflection.

15. The MIMO antenna system of claim 1, wherein at least one of the at least one horizontally polarized antenna (220, 400, 820) and the vertically polarized antenna (210, 830) includes a plurality of parasitic antenna elements, at least two of the plurality of parasitic antenna elements (450) on each of the horizontally and vertically polarized antenna (210, 220, 400, 820, 830) configured to be selectively coupled to one another by a switching network, the selective coupling of the at least two of the plurality of parasitic antenna elements (450) causing each of the at least two of the plurality of parasitic antenna elements (450) to collectively reflect a radiation pattern energy back toward a source of the radiation pattern, the reflection of the radiation pattern increasing gain of the reflected radiation pattern in the direction of pattern reflection.

16. The MIMO antenna system of claim 1, wherein the at least one horizontally polarized antenna (220, 400, 820) is further coupled to the vertically polarized antenna (210, 830) by a printed circuit board connector element (230, 850) by fitting a portion (870) of the printed circuit board connector element (230, 850) inside a rectangular slit (860) formed within the printed circuit board of the at least one horizontally polarized antenna (220, 400, 820) thereby allowing a radio frequency (RF) feed to traverse the at least one horizontally polarized antenna (220, 400, 820) and the vertically polarized antenna (210, 830).

17. The MIMO antenna system of claim 16, wherein a connector tab on the printed circuit board connector element (230, 850) is soldered to the at least one horizontally polarized antenna (220, 400, 820) at the rectangular slit (860) formed within the printed circuit board of the at least one horizontally polarized antenna (220, 400, 830).

18. The MIMO antenna system of claim 17, wherein the printed circuit board connector element (230, 850) is also soldered to the vertically polarized antenna (210, 830) at a connector tab (840a).

19. The MIMO antenna system of claim 1, wherein the at least one horizontally polarized antenna (220, 400, 820) is coupled to the vertically polarized antenna (210, 830) at an intersecting trace element in the printed circuit board of both the at least one horizontally polarized antenna (220, 400, 820) and the vertically polarized antenna (210, 830) thereby allowing an RF feed to traverse the at least one horizontally polarized antenna (220, 400, 820) and the vertically polarized antenna (210, 830).

20. The MIMO antenna system of claim 19, wherein the at least one horizontally polarized antenna (220, 400, 820) and vertically polarized antenna (210, 830) are further coupled by a zero Ohm resistor jumper at the intersecting trace element.

21. The MIMO antenna system of claim 1, comprising:
a plurality of the horizontally polarized antennas (220, 400, 820) each including a plurality of antenna elements (410a-d) configured to be selectively coupled to a radio frequency feed port (430), wherein coupling a first antenna element (410a) and a second antenna element (410c) to the radio frequency feed port (430) generates a substantially omnidirectional radiation pattern substantially in the plane of the horizontally polarized antennas (220,400, 820); and
a plurality of the vertically polarized antennas (210, 830) coupled to the plurality of horizontally polarized antennas (220, 400, 820), wherein the plurality of vertically polarized antennas (210, 830) are configured to generate a radiation pattern substantially similar to a radiation pattern generated by the plurality of horizontally polarized antennas (220, 400, 820), wherein each of the plurality of horizontally polarized antennas (220, 400, 820) are coupled to one of the plurality of vertically polarized antennas (210, 830) by fitting each one of the plurality of vertically polarized antennas (210, 830) inside at least one rectangular slit (810a-c) formed within the printed circuit board of one of the plurality of horizontally polarized antennas (220,400, 820).

22. The MIMO antenna system of claim 1, comprising:
a plurality of the horizontally polarized antennas (220, 400, 820) each including a plurality of antenna elements (410a-d) configured to be selectively coupled to a radio frequency feed port (430), wherein coupling a first antenna element (410a) and a second antenna element (410c) to the radio frequency feed port (430) generates a substantially omnidirectional radiation pattern substantially in the plane of the horizontally polarized antennas (220, 400, 820); and
a plurality of the vertically polarized antennas (210, 830) coupled to the plurality of horizontally polarized antennas (220, 400, 820), wherein the plurality of vertically polarized antennas (210, 830) are configured to generate a radiation pattern substantially similar to a radiation pattern generated by the plurality of horizontally polarized antennas (220, 400, 820), wherein each of the plurality of horizontally polarized antennas (220, 400, 820) are further coupled to one of the plurality of vertically polarized antennas (210, 830) by fitting a portion (870) of a printed circuit board connector element (230, 850) inside at least one rectangular slit (860) formed within the printed circuit board of one of the horizontally polarized antennas (220, 400, 820) and soldering each of the plurality of vertically polarized antennas to a printed circuit board connector element (230, 850) at a connector tab.

## Patentansprüche

1. Antennensystem mit mehreren Eingängen und mehreren Ausgängen (MIMO), das umfasst:
mindestens eine horizontal polarisierte Antenne (220, 400, 820), die auf einer ersten gedruckten Leiterplatte angeordnet ist; und
mindestens eine vertikal polarisierte Antenne (210, 830), die auf einer zweiten Leiterplatte angeordnet ist und mit der mindestens einen horizontal polarisierten Antenne (220, 400, 820) gekoppelt ist, wobei die mindestens eine horizontal polarisierte Antenne (220, 400, 820) mit der mindestens einen vertikal polarisierten Antenne (210, 830) durch Einfügen der vertikal polarisierten Antenne (210, 830) in mindestens einen rechteckigen Schlitz (810a-c), der innerhalb der gedruckten Leiterplatte der mindestens einen horizontal polarisierten Antenne (220, 400, 820) ausgebildet ist, gekoppelt ist.

2. MIMO-Antennensystem nach Anspruch 1, wobei die Polarisation der vertikal polarisierten Antenne (210, 830) zur Polarisation der mindestens einen horizontal polarisierten Antenne (220, 400, 820) im Wesentlichen senkrecht ist.

3. MIMO-Antennensystem nach Anspruch 1, wobei das Strahlungsmuster der vertikal polarisierten Antenne (210, 830) zum Strahlungsmuster der mindestens einen horizontal polarisierten Antenne (220, 400, 820) im Wesentlichen ähnlich ist.

4. MIMO-Antennensystem nach Anspruch 1, wobei das Strahlungsmuster der vertikal polarisierten Antenne (210, 830) zum Strahlungsmuster der mindestens einen horizontal polarisierten Antenne (220, 400, 820) im Wesentlichen unterschiedlich ist.

5. MIMO-Antennensystem nach Anspruch 1, wobei die mindestens eine horizontal polarisierte Antenne (220, 400, 820) eine Vielzahl von Antennenelementen (410a-d) umfasst, die so ausgelegt sind, dass sie selektiv mit einem Hochfrequenz-Einspeisungsanschluss (430) gekoppelt werden.

6. MIMO-Antennensystem nach Anspruch 5, wobei ein im Wesentlichen omnidirektionales Strahlungsmuster im Wesentlichen in der Ebene der mindestens einen horizontal polarisierten Antenne (220, 400, 820) erzeugt wird, wenn ein erstes Antennenelement (410a) und ein zweites Antennenelement (410c) der Vielzahl von Antennenelementen (410a-d) mit dem Hochfrequenz-Einspeisungsanschluss (430) gekoppelt sind.

7. MIMO-Antennensystem nach Anspruch 5, wobei mindestens eines der Vielzahl von Antennenelementen (410a-d) eine Ladestruktur (440) umfasst, die dazu ausgelegt ist, Elektronen zu verlangsamen und die Resonanz des mindestens einen der Vielzahl von Antennenelementen (410a-d) zu ändern.

8. MIMO-Antennensystem nach Anspruch 5, wobei die Vielzahl von Antennenelementen (410a-d) an der mindestens einen horizontal polarisierten Antenne (220, 400, 820) im Wesentlichen zu den Kanten oder im Wesentlichen zur Mitte eines viereckförmigen Substrats oder eines dreieckförmigen Substrats orientiert sind.

9. MIMO-Antennensystem nach Anspruch 5, wobei der Hochfrequenz-Einspeisungsanschluss (430) selektiv mit mindestens einem der Vielzahl von Antennenelementen (410a-d) durch einen Antennenelementselektor gekoppelt wird.

10. MIMO-Antennensystem nach Anspruch 9, wobei der Antennenelementselektor einen KF-Schalter oder eine PIN-Diode umfasst.

11. MIMO-Antennensystem nach Anspruch 6, das ferner mindestens einen Reflektor oder einen Richter (450) umfasst, der dazu ausgelegt ist, das Strahlungsmuster des ersten Antennenelements (410a) und des zweiten Antennenelements (410c), die mit dem Hochfrequenz-Einspeisungsanschluss (430) gekoppelt sind, zu beeinflussen.

12. MIMO-Antennensystem nach Anspruch 1, wobei ein Verbindungselementansatz (840a) an der vertikal polarisierten Antenne (210, 830) an die mindestens eine horizontal polarisierte Antenne (220, 400, 820) an dem mindestens einen rechteckigen Schlitz (860) gelötet ist, der innerhalb der gedruckten Leiterplatte der mindestens einen horizontal polarisierten Antenne (220, 400, 820) ausgebildet ist.

13. MIMO-Antennensystem nach Anspruch 1, wobei jede Antenne (210, 220, 400, 820, 830) mit einem unterschiedlichen Funk gekoppelt ist.

14. MIMO-Antennensystem nach Anspruch 1, wobei jede der mindestens einen horizontal polarisierten Antenne (220, 400, 820) und der vertikal polarisierten Antenne (210, 830) eine Vielzahl von parasitären Antennenelementen (450) umfasst, wobei mindestens zwei der Vielzahl von parasitären Antennenelementen (450) an jeder der horizontal und der vertikal polarisierten Antenne (210, 202, 400, 820, 830) so konfiguriert sind, dass sie durch ein Schaltnetzwerk selektiv miteinander gekoppelt werden, wobei die selektive Kopplung der mindestens zwei der Vielzahl von parasitären Antennenelementen (450) bewirkt, dass jedes der mindestens zwei der Vielzahl von parasitären Antennenelementen (450) gemeinsam eine Strahlungsmusterenergie in Richtung einer Quelle des Strahlungsmusters zurück reflektiert, wobei die Reflexion des Strahlungsmusters die Verstärkung des reflektierten Strahlungsmusters in der Richtung der Musterreflexion erhöht.

15. MIMO-Antennensystem nach Anspruch 1, wobei mindestens eine der mindestens einen horizontal polarisierten Antenne (220, 400, 820) und der vertikal polarisierten Antenne (210, 830) eine Vielzahl von parasitären Antennenelementen umfasst, wobei mindestens zwei der Vielzahl von parasitären Antennenelementen (450) an jeder der horizontal und der vertikal polarisierten Antenne (210, 220, 400, 820, 830) so konfiguriert sind, dass sie durch ein Schaltnetzwerk selektiv miteinander gekoppelt werden, wobei die selektive Kopplung der mindestens zwei der Vielzahl von parasitären Antennenelementen (450) bewirkt, dass jedes der mindestens zwei der Vielzahl von parasitären Antennenelementen (450) gemeinsam eine Strahlungsmusterenergie in Richtung einer Quelle des Strahlungsmusters zurück reflektiert, wobei die Reflexion des Strahlungsmusters die Verstärkung des reflektierten Strahlungsmusters in der Richtung der Musterreflexion erhöht.

16. MIMO-Antennensystem nach Anspruch 1, wobei die mindestens eine horizontal polarisierte Antenne (220, 400, 820) ferner mit der vertikal polarisierten Antenne (210, 830) durch ein Verbindungselement (230, 850) der gedruckten Leiterplatte durch Einfügen eines Teils (870) des Verbindungselements (230, 850) der gedruckten Leiterplatte in einen rechteckigen Schlitz (860), der innerhalb der gedruckten Leiterplatte der mindestens einen horizontal polarisierten Antenne (220, 400, 820) ausgebildet ist, gekoppelt ist, wodurch ermöglicht wird, dass eine Hochfrequenz- (HF) Einspeisung die mindestens eine horizontal polarisierte Antenne (220, 400, 820) und die vertikal polarisierte Antenne (210, 830) durchquert.

17. MIMO-Antennensystem nach Anspruch 16, wobei ein Verbindungselementansatz am Verbindungselement (230, 850) der gedruckten Leiterplatte an die mindestens eine horizontal polarisierte Antenne (220, 400, 820) am rechteckigen Schlitz (860) gelötet ist, der innerhalb der gedruckten Leiterplatte der mindestens einen horizontal polarisierten Antenne (220, 400, 830) ausgebildet ist.

18. MIMO-Antennensystem nach Anspruch 17, wobei das Verbindungselement (230, 850) der gedruckten Leiterplatte auch an die vertikal polarisierte Antenne (210, 830) an einem Verbindungselementansatz (840a) gelötet ist.

19. MIMO-Antennensystem nach Anspruch 1, wobei die mindestens eine horizontal polarisierte Antenne (220, 400, 820) mit der vertikal polarisierten Antenne (210, 830) an einem Element von sich schneidenden Leiterbahnen in der gedruckten Leiterplatte sowohl der mindestens einen horizontal polarisierten Antenne (220, 400, 820) als auch der vertikal polarisierten Antenne (210, 830) gekoppelt ist, wodurch ermöglicht wird, dass eine HF-Einspeisung die mindestens eine horizontal polarisierte Antenne (220, 400, 820) und die vertikal polarisierte Antenne (210, 830) durchquert.

20. MIMO-Antennensystem nach Anspruch 19, wobei die mindestens eine horizontal polarisierte Antenne (220, 400, 820) und die vertikal polarisierte Antenne (210, 830) ferner durch eine Widerstandsbrücke mit null Ohm an dem Element der sich schneidenden Leiterbahnen gekoppelt sind.

21. MIMO-Antennensystem nach Anspruch 1, das umfasst:
eine Vielzahl der horizontal polarisierten Antennen (220, 400, 820) jeweils mit einer Vielzahl von Antennenelementen (410a-d), die so konfiguriert sind, dass sie selektiv mit einem Hochfrequenz-Einspeisungsanschluss (430) gekoppelt werden, wobei die Kopplung eines ersten Antennenelements (410a) und eines zweiten Antennenelements (410c) mit dem Hochfrequenz-Einspeisungsanschluss (430) ein im Wesentlichen omnidirektionales Strahlungsmuster im Wesentlichen in der Ebene der horizontal polarisierten Antennen (220, 400, 820) erzeugt; und
eine Vielzahl der vertikal polarisierten Antennen (210, 830), die mit der Vielzahl von horizontal polarisierten Antennen (220, 400, 820) gekoppelt sind, wobei die Vielzahl von vertikal polarisierten Antennen (210, 830) so konfiguriert sind, dass sie ein Strahlungsmuster im Wesentlichen ähnlich zu einem Strahlungsmuster erzeugen, das durch die Vielzahl von horizontal polarisierten Antennen (220, 400, 820) erzeugt wird, wobei jede der Vielzahl von horizontal polarisierten Antennen (220, 400, 820) mit einer der Vielzahl von vertikal polarisierten Antennen (210, 830) durch Einfügen von jeweils einer der Vielzahl von vertikal polarisierten Antennen (210, 830) in mindestens einen rechteckigen Schlitz (810a-c), der innerhalb der gedruckten Leiterplatte von einer der Vielzahl von horizontal polarisierten Antennen (220, 400, 820) ausgebildet ist, gekoppelt ist.

22. MIMO-Antennensystem nach Anspruch 1, das umfasst:
eine Vielzahl der horizontal polarisierten Antennen (220, 400, 820) mit jeweils einer Vielzahl von Antennenelementen (410a-d), die so konfiguriert sind, dass sie selektiv mit einem Hochfrequenz-Einspeisungsanschluss (430) gekoppelt werden, wobei die Kopplung eines ersten Antennenelements (410a) und eines zweiten Antennenelements (410c) mit dem Hochfrequenz-Einspeisungsanschluss (430) ein im Wesentlichen omnidirektionales Strahlungsmuster im Wesentlichen in der Ebene der horizontal polarisierten Antennen (220, 400, 820) erzeugt; und
eine Vielzahl der vertikal polarisierten Antennen (210, 830), die mit der Vielzahl von horizontal polarisierten Antennen (220, 400, 820) gekoppelt sind, wobei die Vielzahl von vertikal polarisierten Antennen (210, 830) so konfiguriert sind, dass sie ein Strahlungsmuster im Wesentlichen ähnlich zu einem Strahlungsmuster erzeugen, das durch die Vielzahl von horizontal polarisierten Antennen (220, 400, 820) erzeugt wird, wobei jede der Vielzahl von horizontal polarisierten Antennen (220, 400, 820) ferner mit einer der Vielzahl von vertikal polarisierten Antennen (210, 830) durch Einfügen eines Teils (870) eines Verbindungselements (230, 850) der gedruckten Leiterplatte in mindestens einen rechteckigen Schlitz (860), der innerhalb der gedruckten Leiterplatte von einer der horizontal polarisierten Antennen (220, 400, 820) ausgebildet ist, und Löten von jeder der Vielzahl von vertikal polarisierten Antennen an ein Verbindungselement (230, 850) der gedruckten Leiterplatte an einem Verbindungselementansatz gekoppelt ist.

## Revendications

1. Système d'antenne à entrées multiples, sortie multiples (MIMO), comprenant :
au moins une antenne polarisée horizontalement (220, 400, 820) disposée sur une première carte à circuit imprimé, et
au moins une antenne polarisée verticalement (210, 830) disposée sur une deuxième carte à circuit imprimé et reliée à la au moins une antenne polarisée horizontalement (220, 400, 820), dans lequel la au moins une antenne polarisée horizontalement (220, 400, 820) est reliée à la au moins une antenne polarisée verticalement (210, 830) en installant l'antenne polarisée verticalement (210, 830) à l'intérieur d'au moins une fente rectangulaire (810a-c) formée à l'intérieur de la carte à circuit imprimé de la au moins une antenne polarisée horizontalement (220, 400, 820).

2. Système d'antenne MIMO selon la revendication 1, dans lequel la polarisation de l'antenne polarisée verticalement (210, 830) est globalement perpendiculaire à la polarisation de la au moins une antenne polarisée horizontalement (220, 400, 820).

3. Système d'antenne MIMO selon la revendication 1, dans lequel le diagramme de rayonnement de l'antenne polarisée verticalement (210, 830) est globalement similaire au diagramme de rayonnement de la au moins une antenne polarisée horizontalement (220, 400, 820).

4. Système d'antenne MIMO selon la revendication 1, dans lequel le diagramme de rayonnement de l'antenne polarisée verticalement (210, 830) est globalement différent du diagramme de rayonnement de la au moins une antenne polarisée horizontalement (220, 400, 820).

5. Système d'antenne MIMO selon la revendication 1, dans lequel la au moins une antenne polarisée horizontalement (220, 400, 820) inclut une pluralité d'éléments d'antenne (410a-d) configurés pour être reliés sélectivement à un point d'entrée de radiofréquence (430).

6. Système d'antenne MIMO selon la revendication 5, dans lequel un diagramme de rayonnement globalement omnidirectionnel globalement dans le plan de la au moins une antenne polarisée horizontalement (220, 400, 820) est généré lorsqu'un premier élément d'antenne (410a) et un deuxième élément d'antenne (410c) de la pluralité d'éléments d'antenne (410a-d) sont reliés au point d'entrée de radiofréquence (430).

7. Système d'antenne MIMO selon la revendication 5, dans lequel au moins un élément de la pluralité d'éléments d'antenne (410a-d) inclut une structure de chargement (440) configurée pour ralentir les électrons et modifier la résonance du au moins un élément de la pluralité d'éléments d'antenne (410a-d).

8. Système d'antenne MIMO selon la revendication 5, dans lequel la pluralité d'éléments d'antenne (410a-d) sur la au moins une antenne polarisée horizontalement (220, 400, 820) sont orientés globalement vers les bords ou globalement vers le milieu d'un substrat de forme carrée ou d'un substrat de forme triangulaire.

9. Système d'antenne MIMO selon la revendication 5, dans lequel le point d'entrée de radiofréquence (430) est sélectivement relié à au moins un élément de la pluralité d'éléments d'antenne (410a-d) par un sélecteur d'élément d'antenne.

10. Système d'antenne MIMO selon la revendication 9, dans lequel le sélecteur d'élément d'antenne comprend un commutateur KF ou une diode PIN.

11. Système d'antenne MIMO selon la revendication 6, comprenant en outre au moins un réflecteur ou directeur (450) configuré pour influencer le diagramme de rayonnement du premier élément d'antenne (410a) et du deuxième élément d'antenne (410c) reliés au point d'entrée de radiofréquence (430).

12. Système d'antenne MIMO selon la revendication 1, dans lequel une patte de connecteur (840a) sur l'antenne polarisée verticalement (210, 830) est soudée à la au moins une antenne polarisée horizontalement (220, 400, 820) au niveau de la au moins une fente rectangulaire (860) formée dans la carte à circuit imprimé de la au moins une antenne polarisée horizontalement (220, 400, 820).

13. Système d'antenne MIMO selon la revendication 1, dans lequel chaque antenne (210, 220, 400, 820, 830) est reliée à une radio différente.

14. Système d'antenne MIMO selon la revendication 1, dans lequel chaque antenne de la au moins une antenne polarisée horizontalement (220, 400, 820) et de l'antenne polarisée verticalement (210, 830) inclut une pluralité d'éléments d'antenne parasites (450), au moins deux éléments de la pluralité d'éléments d'antenne parasites (450) sur chaque antenne des antennes polarisées horizontalement et verticalement (210, 220, 400, 820, 830) étant configurés pour être sélectivement reliés à un autre par un réseau de commutation, la liaison sélective des au moins deux éléments de la pluralité d'éléments d'antenne parasites (450) amenant chaque élément des au moins deux éléments de la pluralité d'éléments d'antenne parasites (450) à réfléchir collectivement de l'énergie de diagramme de rayonnement en retour vers une source du diagramme de rayonnement, la réflexion du diagramme de rayonnement augmentant le gain du diagramme de rayonnement réfléchi dans la direction de réflexion du diagramme.

15. Système d'antenne MIMO selon la revendication 1, dans lequel au moins une antenne de la au moins une antenne polarisée horizontalement (220, 400, 820) et de l'antenne polarisée verticalement (210, 830) inclut une pluralité d'éléments d'antenne parasites, au moins deux éléments de la pluralité d'éléments d'antenne parasites (450) sur chaque antenne des antennes polarisées horizontalement et verticalement (210, 220, 400, 820, 830) étant configurés pour être sélectivement reliés à un autre par un réseau de commutation, la liaison sélective des au moins deux éléments de la pluralité d'éléments d'antenne parasites (450) amenant chaque élément des au moins deux éléments de la pluralité d'éléments d'antenne parasites (450) à réfléchir collectivement de l'énergie de diagramme de rayonnement en retour vers une source du diagramme de rayonnement, la réflexion du diagramme de rayonnement augmentant le gain du diagramme de rayonnement réfléchi dans la direction de réflexion du diagramme.

16. Système d'antenne MIMO selon la revendication 1, dans lequel la au moins une antenne polarisée horizontalement (220, 400, 820) est en outre reliée à l'antenne polarisée verticalement (210, 830) par un élément de connecteur de carte à circuit imprimé (230, 850) en installant une partie (870) de l'élément de connecteur de carte à circuit imprimé (230, 850) à l'intérieur d'une fente rectangulaire (860) formée dans la carte à circuit imprimé de la au moins une antenne polarisée horizontalement (220, 400, 820) en permettant de cette manière à une entrée de radiofréquence (RF) de traverser la au moins une antenne polarisée horizontalement (220, 400, 820) et l'antenne polarisée verticalement (210, 830).

17. Système d'antenne MIMO selon la revendication 16, dans lequel une patte de connecteur sur l'élément de connecteur de carte à circuit imprimé (230, 850) est soudé sur la au moins une antenne polarisée horizontalement (220, 400, 820) au niveau de la fente rectangulaire (860) formée dans la carte à circuit imprimé de la au moins une antenne polarisée horizontalement (220, 400, 830).

18. Système d'antenne MIMO selon la revendication 17, dans lequel l'élément de connecteur de carte à circuit imprimé (230, 850) est également soudé sur l'antenne polarisée verticalement (210, 830) au niveau d'une patte de connecteur (840a).

19. Système d'antenne MIMO selon la revendication 1, dans lequel la au moins une antenne polarisée horizontalement (220, 400, 820) est reliée à l'antenne polarisée verticalement (210, 830) au niveau d'un élément de trace d'intersection dans la carte à circuit imprimé de la au moins une antenne polarisée horizontalement (220, 400, 820) et de l'antenne polarisée verticalement (210, 830) à la fois en permettant de cette manière à une entrée RF de traverser la au moins une antenne polarisée horizontalement (220, 400, 820) et l'antenne polarisée verticalement (210, 830).

20. Système d'antenne MIMO selon la revendication 19, dans lequel la au moins une antenne polarisée horizontalement (220, 400, 820) et l'antenne polarisée verticalement (210, 830) sont en outre reliées par un cavalier de résistance zéro Ohm au niveau de l'élément de trace d'intersection.

21. Système d'antenne MIMO selon la revendication 1, comprenant :
une pluralité d'antennes polarisées horizontalement (220, 400, 820) incluant chacune une pluralité d'éléments d'antenne (410a-d) configurés pour être sélectivement reliés à un point d'entrée de radiofréquence (430), dans lequel une liaison d'un premier élément d'antenne (410a) et d'un deuxième élément d'antenne (410c) au point d'entrée de radiofréquence (430) génère un diagramme de rayonnement globalement omnidirectionnel globalement dans le plan des antennes polarisées horizontalement (220, 400, 820), et
une pluralité d'antennes polarisées verticalement (210, 830) reliées à la pluralité d'antennes polarisées horizontalement (220, 400, 820), dans lequel la pluralité d'antennes polarisées verticalement (210, 830) sont configurées pour générer un diagramme de rayonnement globalement similaire à un diagramme de rayonnement généré par la pluralité d'antennes polarisées horizontalement (220, 400, 820), dans lequel chaque antenne de la pluralité d'antennes polarisées horizontalement (220, 400, 820) est reliée à une antenne de la pluralité d'antennes polarisées verticalement (210, 830) en installant chaque antenne de la pluralité d'antennes polarisées verticalement (210, 830) à l'intérieur d'au moins une fente rectangulaire (810a-c) formée dans la carte à circuit imprimé d'une antenne de la pluralité d'antennes polarisées horizontalement (220, 400, 820).

22. Système d'antenne MIMO selon la revendication 1, comprenant :
une pluralité d'antennes polarisées horizontalement (220, 400, 820) incluant chacune une pluralité d'éléments d'antenne (410a-d) configurés pour être sélectivement reliés à un point d'entrée de radiofréquence (430), dans lequel une liaison d'un premier élément d'antenne (410a) et d'un deuxième élément d'antenne (410c) au point d'entrée de radiofréquence (430) génère un diagramme de rayonnement globalement omnidirectionnel globalement dans le plan des antennes polarisées horizontalement (220, 400, 820), et
une pluralité d'antennes polarisées verticalement (210, 830) reliées à la pluralité d'antennes polarisées horizontalement (220, 400, 820), dans lequel la pluralité d'antennes polarisées verticalement (210, 830) sont configurées pour générer un diagramme de rayonnement globalement similaire à un diagramme de rayonnement généré par la pluralité d'antennes polarisées horizontalement (220, 400, 820), dans lequel chaque antenne de la pluralité d'antennes polarisées horizontalement (220, 400, 820) est reliée à une antenne de la pluralité d'antennes polarisées verticalement (210, 830) en installant une partie (870) d'un élément de connecteur de carte à circuit imprimé (230, 850) à l'intérieur d'au moins une fente rectangulaire (860) formée dans la carte à circuit imprimé d'une des antennes polarisées horizontalement (220, 400, 820) et en soudant chaque antenne de la pluralité d'antennes polarisées verticalement à un élément de connecteur de carte à circuit imprimé (230, 850) au niveau d'une patte de connecteur.
